# EUROPÄISCHE PATENTSCHRIFT

(11) **EP 3 057 850 B1**
(45) Veröffentlichungstag und Bekanntmachung des Hinweises auf die Patenterteilung: **02.08.2017**
(21) Anmeldenummer: 14771336.6
(22) Anmeldetag: 22.09.2014
(51) Int. Cl.: B62D 15/02, G01D 5/14

(54) **SENSORANORDNUNG ZUR ERFASSUNG VON DREHWINKELN AN EINEM ROTIERENDEN BAUTEIL IN EINEM FAHRZEUG**
SENSOR ARRANGEMENT FOR SENSING ROTATIONAL ANGLES ON A ROTATING COMPONENT IN A VEHICLE
SYSTÈME DE CAPTEUR DE DÉTECTION D'ANGLES DE ROTATION D'UN COMPOSANT ROTATIF DANS UN VÉHICULE

(30) Priorität: 18.10.2013 DE 102013221191
(43) Veröffentlichungstag der Anmeldung: 24.08.2016
(73) Patentinhaber: Robert Bosch GmbH, 70442 Stuttgart (DE)
(72) Erfinder: HAS, Remigius, 71120 Grafenau-Daetzingen (DE); HENRICI, Fabian, 70195 Stuttgart (DE)
(86) Internationale Anmeldenummer: PCT/EP2014/070126
(87) Internationale Veröffentlichungsnummer: WO 2015/055385

(56) Entgegenhaltungen:
- DE-A1-102011 078 597

## Beschreibung

### Stand der Technik

Die Erfindung geht aus von einer Sensoranordnung zur Erfassung von Drehwinkeln an einem rotierenden Bauteil in einem Fahrzeug nach der Gattung des unabhängigen Patentanspruchs 1.

Bei dem bekannten Lenkwinkelsensor wird ein Zählrad zur Bestimmung der Anzahl der Umdrehungen des Lenkrades berührungslos mittels Magnetfeldsensoren abgetastet. Ein derartiges System hat den Nachteil, dass bei ausgeschalteter Zündung ein Ruhestrom bereitgestellt werden muss, um ein Verdrehen des Lenkrades bei ausgeschalteter Zündung erkennen zu können. Bei dauerhafter Nichtbenutzung des Fahrzeuges führt dies zu einer unerwünschten Entleerung der Fahrzeugbatterie. Wird ein solcher Ruhestrom nicht bereitgestellt, kann der Lenkwinkel nicht mehr eindeutig bestimmt werden, wenn ein Verdrehen des Lenkrades bei ausgeschalteter Zündung oder abgeklemmter Batterie erfolgt.

Die Offenlegungsschrift DE10 2011 078 597 A1 offenbart die Präambel des unabhängigen Anspruchs und befasst sich mit einem Verfahren zur Messung des absoluten Drehwinkels bei Systemen, bei denen ein sich drehendes Element mit einem Umsetzer zusammenwirkt, der die Drehbewegung des sich drehenden Elementes in eine lineare oder gekrümmte Bewegung des Umsetzers umsetzt. Dabei wird der in Abhängigkeit von der Drehbewegung des sich drehenden Elementes zurückgelegte Weg des Umsetzers gemessen und als Maß für den absoluten Drehwinkel verwendet.

In der Offenlegungsschrift DE 10 2008 011 448 A1 wird beispielsweise eine Anordnung zur Erfassung eines Drehwinkels beschrieben. Die beschriebene Anordnung umfasst Geber und Sensoren, welche in Abhängigkeit von einer Dreh winkeländerung eines rotierenden Bauteils von den Gebern erzeugte Änderungen einer physikalischen Größe als digital auswertbare Signale detektieren. Das rotierende Bauteil weist mindestens einen an seinem Umfang gekoppelten, durch seine Rotation sich drehenden Satelliten kleineren Umfangs, vorzugsweise mit einem Winkelsensor auf, welcher über ein axial gekoppeltes Hypozykloidgetriebe eine ebenfalls rotierende Hyperzykloidscheibe oder Hypozykloidzahnrad antreibt, deren Umdrehungsgeschwindigkeit durch das Hypozykloidgetriebe derart untersetzt ist, dass hieraus eine Umdrehungszahl des rotierenden Bauteils und der absolute Lenkwinkel über mehrere Umdrehungen der Lenkwelle mit einem Umdrehungssensorsystem ermittelbar ist.

### Offenbarung der Erfindung

Die erfindungsgemäße Sensoranordnung zur Erfassung von Drehwinkeln an einem rotierenden Bauteil in einem Fahrzeug mit den Merkmalen des unabhängigen Patentanspruchs 1 hat demgegenüber den Vorteil, dass ein aktueller Drehwinkel des rotierenden Bauteils mit zwei separierten berührungslosen Messmethoden ermittelt wird, welche vorzugsweise auf dem Wirbelstromeffekt basieren. Eine erste Messmethode erfasst eine 360°-Rotation und eine zweite Messmethode fungiert als "Rundenzähler", welcher über eine Abstandsänderung eine Mehrfachumdrehung des rotierenden Bauteils detektiert. Durch die Aufteilung des zu ermittelnden Drehwinkels in eine Rotation und eine Abstandsänderung können Ausführungsformen der erfindungsgemäßen Sensoranordnung sehr einfach eine höhere Auflösung erreichen. Zudem ist durch die Überführung der Drehbewegung in die mechanische Rotation und die Höhenänderung immer eine eindeutige Drehposition auch bei mehrfachen Umdrehungen des rotierenden Bauteils vorhanden. In vorteilhafter Weise bleibt die Drehbewegung in der mechanischen veränderten Rotation und Höhenänderung erhalten, so dass auch nach ausgeschalteter Zündung oder abgeklemmter Batterie oder bei Versagen der Elektronik der richtige absolute Drehwinkel zur Verfügung steht. Dadurch ist ein besonders sicherer Betrieb bzw. eine besonders sichere Erkennung des Drehwinkels mittels des Wirbelstromeffekts möglich. Ein weiterer Vorteil kann die mechanische Vereinfachung darstellen, was zu einer Kostenersparnis führen kann, da bei Ausführungsformen der erfindungsgemäßen Sensoranordnung zur Erfassung von Drehwinkeln an einem rotierenden Bauteil in einem Fahrzeug keine Ritzel mit Zahnstruktur, welche ineinander greifen, bzw. Magnete erforderlich sind, was zu einer Kostenersparnis führen kann. Zudem können Ausführungsformen der erfindungsgemäßen Sensoranordnung zur Erfassung von Drehwinkeln an einem rotierenden Bauteil in einem Fahrzeug aufgrund der Reduzierung beweglichen Komponenten in vorteilhafter Weise sehr geräuscharm arbeiten. Vorzugsweise kann die erfindungsgemäße Sensoranordnung zur Bestimmung des Lenkwinkels eines Fahrzeugs eingesetzt werden. Dabei ist das rotierende Bauteil vorzugsweise als Lenksäule des Fahrzeugs oder als Hülse ausgeführt, welche verdrehsicher mit der Lenksäule verbunden ist.

Ausführungsformen der vorliegenden Erfindung stellen eine Sensoranordnung zur Erfassung von Drehwinkeln an einem rotierenden Bauteil in einem Fahrzeug zur Verfügung. Das rotierende Bauteil ist mit einem Messwertgeber gekoppelt, welcher in Verbindung mit mindestens einem Sensor ein den Drehwinkel des rotierenden Bauteils repräsentierendes Signal erzeugt. Erfindungsgemäß bildet der Messwertgeber mit mindesten einem als Drehwinkelsensor ausgeführten Sensor einen Drehwinkeldetektor aus, welcher eine Winkelstellung des rotierenden Bauteils im Bereich einer 360°-Rotation erfasst. Zudem bildet der Messwertgeber mit mindestens einem als Abstandssensor ausgeführten Sensor einen Umdrehungsdetektor aus, welcher eine Umdrehungszahl des rotierenden Bauteils ermittelt. Des Weiteren bildet der Messwertgeber mit dem rotierenden Bauteil einen Bewegungswandler aus, welcher die Rotation des rotierenden Bauteils in eine axiale Translation des Messwertgebers in Bezug auf das rotierende Bauteil umwandelt, wobei der mindestens eine Abstandssensor einen zurückgelegten axialen Weg des Messwertgebers ermittelt, welcher die Umdrehungszahl des rotierenden Bauteils repräsentiert. Ein aktueller Drehwinkel des rotierenden Bauteils ist aus der vom Drehwinkeldetektor erfassten Winkelstellung und der vom Umdrehungsdetektor ermittelten Umdrehungszahl ermittelbar.

Durch die in den abhängigen Ansprüchen aufgeführten Maßnahmen und Weiterbildungen sind vorteilhafte Verbesserungen der im unabhängigen Patentanspruch 1 angegebenen Sensoranordnung zur Erfassung von Drehwinkeln an einem rotierenden Bauteil in einem Fahrzeug möglich.

Besonders vorteilhaft ist, dass der Messwertgeber als drehfest mit dem rotierenden Bauteil gekoppelte Scheibe mit einem Grundkörper ausgeführt ist, welcher eine zentrale Öffnung und ein am Außenumfang aufgebrachtes Außengewinde aufweist, welches in ein Innengewinde eingeschraubt ist, welches in einer Innenwand einer Aufnahmeöffnung eines Gehäuses eingebracht ist. Das Gehäuse ist vorzugsweise als Topf mit einem Boden und einem Deckel ausgeführt, welche Öffnungen aufweisen, durch welche das rotierende Bauteil verläuft. Dies ermöglicht in vorteilhafter Weise eine kompakte Bauform der erfindungsgemäßen Sensoranordnung zur Erfassung von Drehwinkeln an einem rotierenden Bauteil in einem Fahrzeug.

In vorteilhafter Ausgestaltung der erfindungsgemäßen Sensoranordnung kann der Grundkörper über einen Mitnehmer mit dem rotierenden Bauteil gekoppelt werden, welcher die Rotationsbewegung überträgt, wobei der Grundkörper durch die axiale Führung am Außenumfang eine aufgezwungene Axialbewegung ausführt. Der zurückgelegte axiale Weg des Grundkörpers kann dann zur Ermittlung der Umdrehungszahl ausgewertet werden.

In weiterer vorteilhafter Ausgestaltung der erfindungsgemäßen Sensoranordnung können die Sensoren als Wirbelstromsensoren mit einer vorgegebenen Anzahl von Detektionsspulen und einer vorgegebenen Anzahl von korrespondierenden Detektionsbereichen ausgeführt werden, welche den Abstand bzw. den Drehwinkel über eine Änderung des zugehörigen Magnetfelds ermitteln. Vorzugsweise werden die Spulen des mindesten einen als Drehwinkelsensor ausgeführten Sensors und die Spulen des mindestens einen als Abstandssensor ausgeführten Sensors auf einem gemeinsamen Spulenträger angeordnet. Die Detektionsbereiche sind aus einem elektrisch leitfähigen oder einem ferromagnetischen Material ausgebildet, in welchem korrespondierende Spulen die Wirbelströme induzieren. Anzahl und Form der Spulen sowie der Detektionsbereiche können in vorteilhafter Weise an die vorhandenen Einbaubedingungen angepasst werden.

In weiterer vorteilhafter Ausgestaltung der erfindungsgemäßen Sensoranordnung können die Detektionsbereiche des mindesten einen als Drehwinkelsensor ausgeführten Sensors an einem inneren Randbereich des Grundkörpers des Messwertgebers angeordnet werden. Die Detektionsbereiche des mindesten einen als Abstandssensor ausgeführten Sensors können beispielsweise an einem äußeren Randbereich des Grundkörpers des Messwertgebers angeordnet werden. Des Weiteren kann zwischen dem inneren Randbereich und dem äußeren Randbereich des Grundkörpers ein verformbarer Zwischenbereich angeordnet werden, so dass der innere Randbereich seine axiale Position während der Drehbewegung des rotierenden Bauteils beibehält und nur der äußere Bereich eine durch die axiale Führung am Außenumfang aufgezwungene Axialbewegung ausführt. Der zurückgelegte axiale Weg des äußeren Randbereichs kann dann zur Ermittlung der Umdrehungszahl ausgewertet werden.

In weiterer vorteilhafter Ausgestaltung der erfindungsgemäßen Sensoranordnung können der mindesten eine als Abstandssensor ausgeführte Sensor und der mindestens eine als Drehwinkelsensor ausgeführte Sensor mindestens eine gemeinsame Detektionsspule und/oder mindestens einen gemeinsamen Detektionsbereich aufweisen.

In weiterer vorteilhafter Ausgestaltung der erfindungsgemäßen Sensoranordnung können die Detektionsspulen der Sensoren in mehreren Lagen verteilt im Spulenträger angeordnet werden. Dadurch kann in vorteilhafter Weise eine höhere Sensitivität, d.h. eine größere Spuleninduktivität erzielt werden, welche über mehrere Lagen in Reihe geschaltet ist.

Eine Auswerte- und Steuereinheit kann die Spulen des mindestens einen Drehwinkelsensors und/oder des mindestens einen Abstandssensors gleichzeitig oder in einer vorgegebenen Reihenfolge auswerten. Dies ermöglicht in vorteilhafter Weise eine Kompensation von Störeinflüssen, wie beispielsweise einer Temperaturänderung usw. Zudem ermöglicht die Verwendung von mehreren Sensoren bzw. Spulen in vorteilhafter Weise eine redundante Ermittlung des Drehwinkels am rotierenden Bauteil.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Schnittdarstellung eines ersten Ausführungsbeispiels einer erfindungsgemäßen Sensoranordnung zur Erfassung von Drehwinkeln an einem rotierenden Bauteil in einem Fahrzeug in einer ersten Position.
Fig. 2 zeigt eine schematische perspektivische Schnittdarstellung des ersten Ausführungsbeispiels einer erfindungsgemäßen Sensoranordnung aus Fig. 1 in einer zweiten Position.
Fig. 3 zeigt eine schematische Draufsicht auf ein erstes Ausführungsbeispiel eines Spulenträgers für die erfindungsgemäße Sensoranordnung aus Fig. 1 und 2.
Fig. 4 zeigt eine schematische Ansicht von unten auf ein erstes Ausführungsbeispiel eines Messwertgebers für die erfindungsgemäße Sensoranordnung aus Fig. 1 und 2.
Fig. 5 zeigt eine schematische Draufsicht auf ein zweites Ausführungsbeispiel eines Spulenträgers für die erfindungsgemäße Sensoranordnung aus Fig. 1 und 2.
Fig. 6 zeigt eine schematische Ansicht von unten auf ein zweites Ausführungsbeispiel eines Messwertgebers für die erfindungsgemäße Sensoranordnung aus Fig. 1 und 2.
Fig. 7 zeigt eine schematische perspektivische Schnittdarstellung eines zweiten Ausführungsbeispiels einer erfindungsgemäßen Sensoranordnung zur Erfassung von Drehwinkeln an einem rotierenden Bauteil in einem Fahrzeug in einer ersten Position.
Fig. 8 zeigt eine schematische perspektivische Schnittdarstellung des zweiten Ausführungsbeispiels einer erfindungsgemäßen Sensoranordnung aus Fig. 7 in einer zweiten Position.
Fig. 9 zeigt eine schematische Draufsicht auf ein erstes Ausführungsbeispiel eines Spulenträgers für die erfindungsgemäße Sensoranordnung aus Fig. 7 und 8.
Fig. 10 zeigt eine schematische Draufsicht auf ein zweites Ausführungsbeispiel eines Spulenträgers für die erfindungsgemäße Sensoranordnung aus Fig. 7 und 8.
Fig. 11 zeigt eine schematische Ansicht von unten auf ein erstes Ausführungsbeispiel eines Messwertgebers für die erfindungsgemäße Sensoranordnung aus Fig. 7 und 8.
Fig. 12 zeigt eine schematische Ansicht von unten auf ein zweites Ausführungsbeispiel eines Messwertgebers für die erfindungsgemäße Sensoranordnung aus Fig. 7 und 8.

### Ausführungsformen der Erfindung

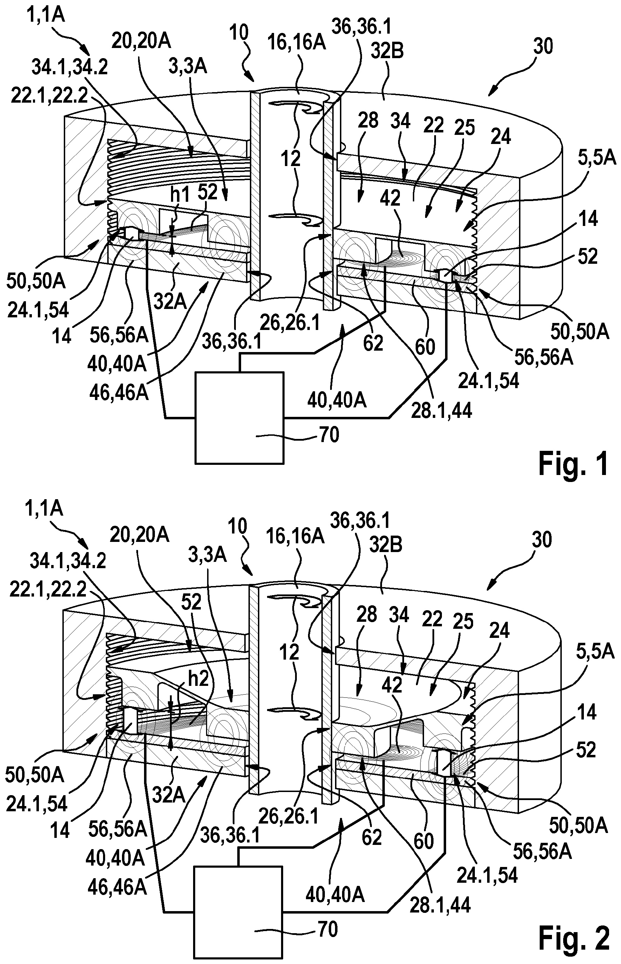

Wie aus Fig. 1 bis 12 ersichtlich ist, umfassen Ausführungsformen einer erfindungsgemäßen Sensoranordnung 1, 1A, 1 B zur Erfassung von Drehwinkeln an einem rotierenden Bauteil 10 in einem Fahrzeug einen Messwertgeber 20, welcher in Verbindung mit mindestens einem Sensor 40, 50 ein den Drehwinkel des rotierenden Bauteils 10 repräsentierendes Signal erzeugt.

Erfindungsgemäß bildet der Messwertgeber 20 mit mindesten einem als Drehwinkelsensor 50, 50A, 50B ausgeführten Sensor einen Drehwinkeldetektor 3, 3A, 3B aus, welcher eine Winkelstellung des rotierenden Bauteils 10 im Bereich einer 360°-Rotation erfasst. Zudem bildet der Messwertgeber 20 mit mindestens einem als Abstandssensor 40, 40A, 40B ausgeführten Sensor einen Umdrehungsdetektor 5, 5A, 5B aus, welcher eine Umdrehungszahl des rotierenden Bauteils 10 ermittelt. Des Weiteren bildet der Messwertgeber 20 mit dem rotierenden Bauteil 10 einen Bewegungswandler aus, welcher die Rotation 12 des rotierenden Bauteils 10 in eine axiale Translation 14 des Messwertgebers 20 in Bezug auf das rotierende Bauteil 10 umwandelt. Der mindestens eine Abstandssensor 40, 40A, 40B ermittelt einen zurückgelegten axialen Weg des Messwertgebers 20, welcher die Umdrehungszahl des rotierenden Bauteils 10 repräsentiert. Ein aktueller Drehwinkel des rotierenden Bauteils 10 wird aus der vom Drehwinkeldetektor 3 erfassten Winkelstellung und der vom Umdrehungsdetektor 5 ermittelten Umdrehungszahl ermittelt.

Ausführungsformen der erfindungsgemäßen Sensoranordnung 1, 1A, 1B können beispielsweise als Lenkwinkelsensor zur Bestimmung des Lenkwinkels eines Fahrzeugs eingesetzt werden, wobei beispielsweise ein aktueller Drehwinkel einer Lenksäule des Fahrzeugs ermittelt werden soll. In den dargestellten Ausführungsbeispielen entspricht das rotierende Bauteil 10 einer Hülse 16, 16A, 16B, welche beispielsweise axial auf die Lenksäule als rotierendes Bauteil aufgeschoben und drehfest mit der Lenksäule verbunden ist.

Wie aus Fig. 1 bis 12 weiter ersichtlich ist, ist der Messwertgeber 20 als drehfest mit dem rotierenden Bauteil 10 gekoppelte Scheibe 20A mit einem Grundkörper 22, 22A, 22B, 22C, 22D, 22E, 22F ausgeführt, welcher eine zentrale Öffnung 26 und ein am Außenumfang 22.1 aufgebrachtes Außengewinde 22.2 aufweist, welches in ein Innengewinde 34.2 eingeschraubt ist, welches in einer Innenwand 34.1 einer Aufnahmeöffnung 34 eines Gehäuses 30 eingebracht ist. Bei den dargestellten Ausführungsbeispielen ist das Gehäuse 30 als Topf mit einem Boden 32A und einem Deckel 32B ausgeführt, welche Öffnungen 36 aufweisen, durch welche das rotierende Bauteil 10 spielbehaftet verläuft. Das bedeutet, dass die Wandungen 36.1 der Öffnungen 36 im Boden 32A bzw. Deckel 32B einen vorgebbaren Abstand zum rotierenden Bauteil 10 aufweisen. Dadurch ist der Messwertgeber 20 bauraumsparend innerhalb des Gehäuses 30 angeordnet, so dass in vorteilhafter Weise eine kompakte Bauform der erfindungsgemäßen Sensoranordnung 1, 1A, 1 B zur Erfassung von Drehwinkeln an einem rotierenden Bauteil 10 in einem Fahrzeug möglich ist.

In den dargestellten Ausführungsbeispielen sind die Sensoren 40, 50 als Wirbelstromsensoren mit einer vorgegebenen Anzahl von Detektionsspulen 42, 52, welche auf einem gemeinsamen Spulenträger 60 angeordnet sind, und einer vorgegebenen Anzahl von korrespondierenden Detektionsbereichen 44, 54 ausgeführt, welche am Messwertgeber 20, 30 im Wesentlichen fluchtend bzw. zumindest teilweise überlappend mit den korrespondierenden Detektionsspulen 42, 52 ausgebildet sind. Das bedeutet, dass die Detektionsspulen 42 des Drehwinkelsensors 40 axial überlappend zu den korrespondierenden Detektionsbereichen 44 auf dem Spulenträger 60 angeordnet sind, bzw. die Detektionsspulen 52 des Abstandssensors 50 axial überlappend zu den korrespondierenden Detektionsbereichen 54 auf dem Spulenträger 60 angeordnet sind. In den dargestellten Ausführungsbeispielen ist der Spulenträger 60 als ortsfeste Scheibe mit einer zentralen Öffnung 62 ausgeführt, durch welche das rotierende Bauteil 10 verläuft und welche innerhalb des Gehäuses 30 angeordnet ist. Durch die Drehbewegung des Messwertgebers 20 bzw. die Axialbewegung 14 und die damit verbundene Abstandsänderung des Messwertgebers 20 werden die von den Wirbelstromsensoren 40, 50 zwischen den Detektionsspulen 42, 52 und den Detektionsbereichen 44, 54 erzeugten Magnetfelder 46, 56 beeinflusst, so dass beispielsweise in Verbindung mit jeweils einer nicht dargestellten Festkapazität eine entsprechende Frequenzänderung erfasst und von einer Auswerte- und Steuereinheit 70 zur Drehwinkelermittlung und/oder zur Abstandsermittlung ausgewertet werden kann. Die Spulen 42, 52 der Wirbelstromsensoren 40, 50 können in einem mikromechanischen Verfahren in Silizium hergestellt oder direkt auf dem vorzugsweise als Leiterplatte ausgeführten Spulenträger 60 realisiert werden, wobei die direkte Anordnung auf der Leiterplatte einen weiteren Kostenvorteil aufweisen kann. Dabei können verschiedene Spulenformen implementiert werden, wie beispielsweise rund oder rechteckig, aber auch kompliziertere Spulenformen könnten sich als vorteilhaft erweisen. Zudem können die Spulen 42, 52 auch in einer größeren Form (Zentimeterbereich) hergestellt werden. Des Weiteren können die Spulen 42, 52 der Wirbelstromsensoren 40, 50 in der Leiterplatte sowie auch im Silizium in mehreren Lagen verteilt werden, um eine höhere Sensitivität zu erzielen, d.h. eine größere Spuleninduktivität, welche über mehrere Lagen in Reihe geschaltet ist. Die Auswerte- und Steuereinheit 70 kann die Spulen 42, 52 des mindestens einen Drehwinkelsensors 40 und/oder des mindestens einen Abstandssensors 50 gleichzeitig oder in einer vorgegebenen Reihenfolge auswerten.

Wie aus Fig. 1 bis 6 weiter ersichtlich ist, sind bei einem ersten Ausführungsbeispiel der erfindungsgemäßen Sensoranordnung 1A die Detektionsbereiche 44 des mindesten einen als Drehwinkelsensor 40 ausgeführten Sensors an einem inneren Randbereich 28 des Grundkörpers 22 des Messwertgebers 20 angeordnet. Die Detektionsbereiche 54 des mindesten einen als Abstandssensor 50 ausgeführten Sensors sind an einem äußeren Randbereich 24 des Grundkörpers 22 des Messwertgebers 20 angeordnet. Zwischen dem inneren Randbereich 28 und dem äußeren Randbereich 24 des Grundkörpers 22 ist ein verformbarer Zwischenbereich 25 angeordnet, so dass der innere Randbereich 28 seine axiale Position während der Drehbewegung des rotierenden Bauteils 10 beibehält und der äußere Bereich 24 eine durch die axiale Führung am Außenumfang 22.1 aufgezwungene Axialbewegung ausführt. Der zurückgelegte axiale Weg des äußeren Randbereichs 24 wird zur Ermittlung der Umdrehungszahl ausgewertet. Die in Fig. 1 dargestellte erste Position der erfindungsgemäßen Sensoranordnung 1A entspricht einem Linksanschlag des rotierenden Bauteils 10 mit einem minimalen Abstand h1 zwischen einer äußeren Stirnfläche 24.1 des Grundkörpers 22 des Messwertgebers 20 und einer Oberfläche des Spulenträgers 60. Die in Fig. 2 dargestellte zweite Position der erfindungsgemäßen Sensoranordnung 1A entspricht einem Rechtsanschlag des rotierenden Bauteils 10 mit einem maximalen Abstand h2 zwischen der äußeren Stirnfläche 24.1 des Grundkörpers 22A des Messwertgebers 30 und der Oberfläche des Spulenträgers 60. Der axiale Abstand zwischen einer inneren Stirnfläche 28.1 des Grundkörpers 22 des Messwertgebers 20 ist unabhängig von der Drehstellung des rotierenden Bauteils 10 im Wesentlichen konstant.

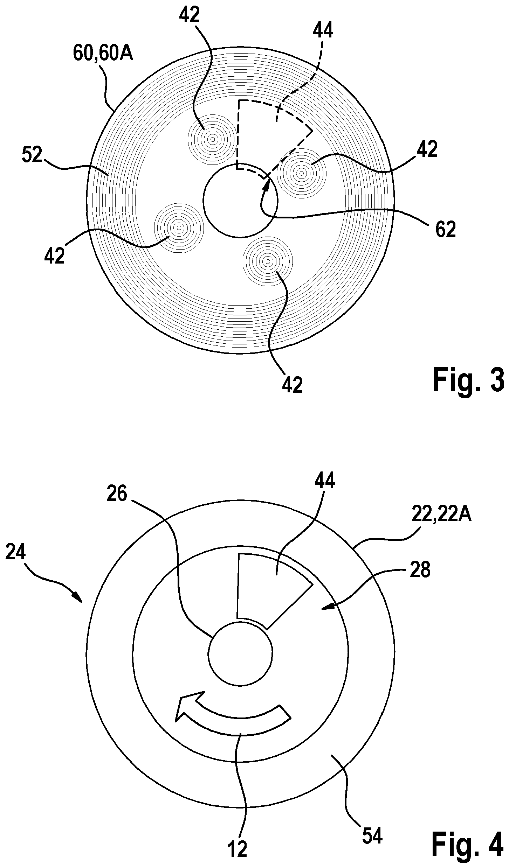

Wie aus Fig. 3 ersichtlich ist, umfasst ein erstes Ausführungsbeispiel des Spulenträgers 60A vier um die zentrale Öffnung 62 des als Scheibe ausgeführten Spulenträgers 60A verteilt angeordnete erste Detektionsspulen 42 für den Drehwinkelsensor 40 und eine am Rand des Spulenträgers 60A angeordnete umlaufende Detektionsspule 52 für den Abstandssensor 50A. Wie aus Fig. 4 ersichtlich ist, umfasst ein erstes Ausführungsbeispiel des Grundkörpers 22A des Messwertgebers 20 einen im inneren Randbereich 28 angeordneten an die zentrale Öffnung 26 angrenzenden als Kreisringsegment ausgeführten ersten Detektionsbereich 44 für den Drehwinkelsensor 40A. Zudem umfasst das erste Ausführungsbeispiel des Grundkörpers 22A des Messwertgebers 20 einen im äußeren Randbereich 24 angeordneten als umlaufender Kreisring ausgeführten zweiten Detektionsbereich 54 für den Abstandssensor 50A.

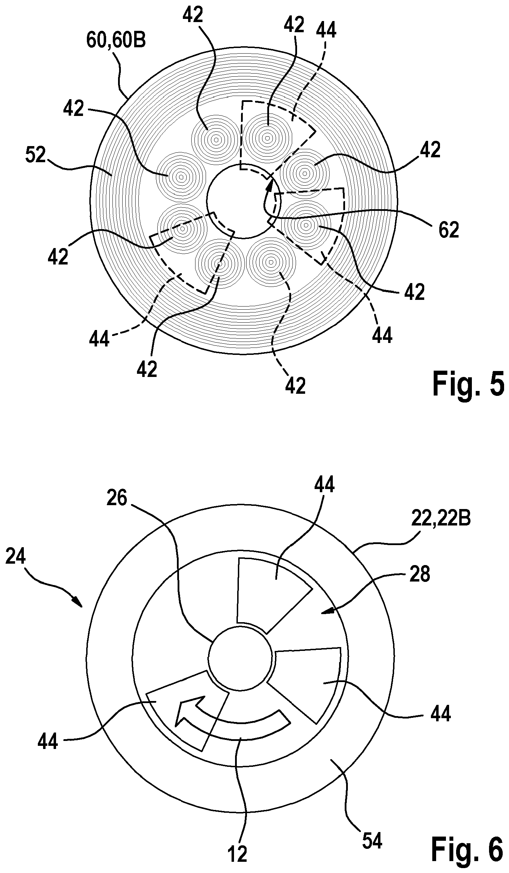

Wie aus Fig. 5 ersichtlich ist, umfasst ein zweites Ausführungsbeispiel des Spulenträgers 60B acht um die zentrale Öffnung 62 des Spulenträgers 60B verteilt angeordnete erste Detektionsspulen 42 für den Drehwinkelsensor 40A und eine am Rand des Spulenträgers 60B angeordnete umlaufende Detektionsspule 52 für den Abstandssensor 50A. Wie aus Fig. 6 ersichtlich ist, umfasst ein zweites Ausführungsbeispiel des Grundkörpers 22B des Messwertgebers 20 drei im inneren Randbereich 28 angeordnete an die zentrale Öffnung 26 angrenzende als Kreisringsegmente ausgeführte erste Detektionsbereiche 44 für den Drehwinkelsensor 40A, deren Winkelbeziehungen zueinander keinem ganzzahligen Vielfachen entsprechen. Zudem umfasst das zweite Ausführungsbeispiel des Grundkörpers 22B des Messwertgebers 20 einen im äußeren Randbereich 24 angeordneten als umlaufender Kreisring ausgeführten zweiten Detektionsbereich 54 für den Abstandssensor 50A.

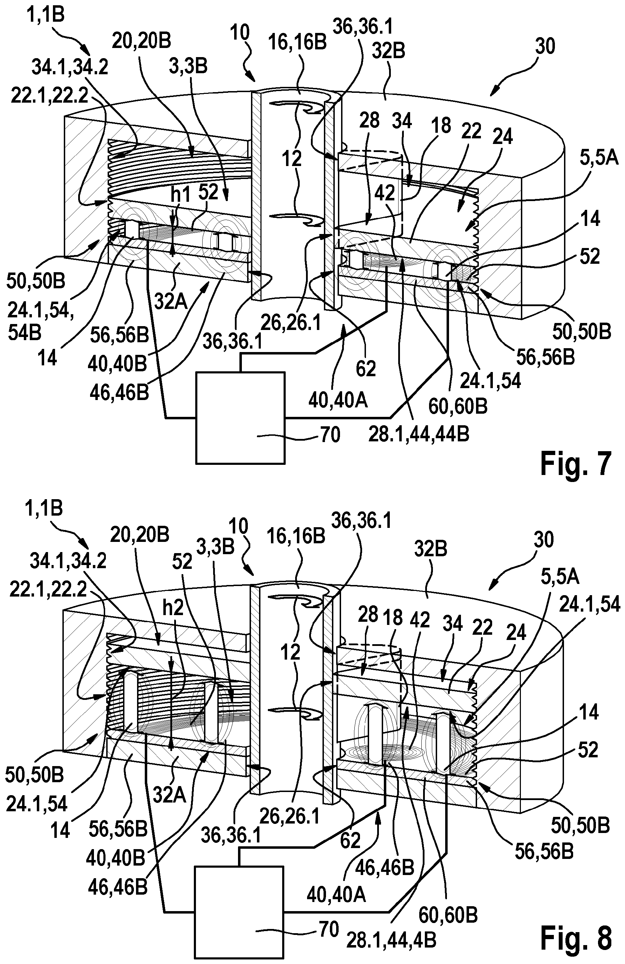

Wie aus Fig. 7 bis 12 weiter ersichtlich ist, sind bei einem zweiten Ausführungsbeispiel der erfindungsgemäßen Sensoranordnung 1 B analog zum ersten Ausführungsbeispiel die Detektionsbereiche 44 des mindesten einen als Drehwinkelsensor 40 ausgeführten Sensors an einem inneren Randbereich 28 des Grundkörpers 22 des Messwertgebers 20 angeordnet. Die Detektionsbereiche 54 des mindesten einen als Abstandssensor 50 ausgeführten Sensors sind an einem äußeren Randbereich 24 des Grundkörpers 22 des Messwertgebers 20 angeordnet. Im Gegensatz zum ersten Ausführungsbeispiel ist der Grundkörper 22 des Messwertgebers 20 beim zweiten Ausführungsbeispiel der erfindungsgemäßen Sensoranordnung 1 B über einen Mitnehmer 18 mit dem rotierenden Bauteil 10 gekoppelt, welcher die Rotationsbewegung 12 überträgt. Der Grundkörper 22 führt durch die axiale Führung am Außenumfang 22.1 eine aufgezwungene Axialbewegung aus, wobei der zurückgelegte axiale Weg des Grundkörpers 22 zur Ermittlung der Umdrehungszahl ausgewertet wird. Dadurch ist im zweiten Ausführungsbeispiel auch der Drehwinkelsensor 40B einer axialen Bewegung ausgesetzt. Dies vereinfacht nochmals den mechanischen Aufbau der erfindungsgemäßen Sensoranordnung 1 B. Der zurückgelegte axiale Weg des Messwertgebers 20 wird am äußeren Randbereich 24 zur Ermittlung der Umdrehungszahl ausgewertet. Die in Fig. 7 dargestellte erste Position der erfindungsgemäßen Sensoranordnung 1 B entspricht einem Linksanschlag des rotierenden Bauteils 10 mit einem minimalen Abstand h1 zwischen einer äußeren Stirnfläche 24.1 des Grundkörpers 22 des Messwertgebers 20 und einer Oberfläche des Spulenträgers 60. Die in Fig. 8 dargestellte zweite Position der erfindungsgemäßen Sensoranordnung 1 B entspricht einem Rechtsanschlag des rotierenden Bauteils 10 mit einem maximalen Abstand h2 zwischen der äußeren Stirnfläche 24.1 des Grundkörpers 22A des Messwertgebers 30 und der Oberfläche des Spulenträgers 60. Der axiale Abstand der inneren Stirnfläche 28.1 des Grundkörpers 22 des Messwertgebers 20 ändert sich analog zum Abstand der äußeren Stirnfläche 24 des Grundkörpers.

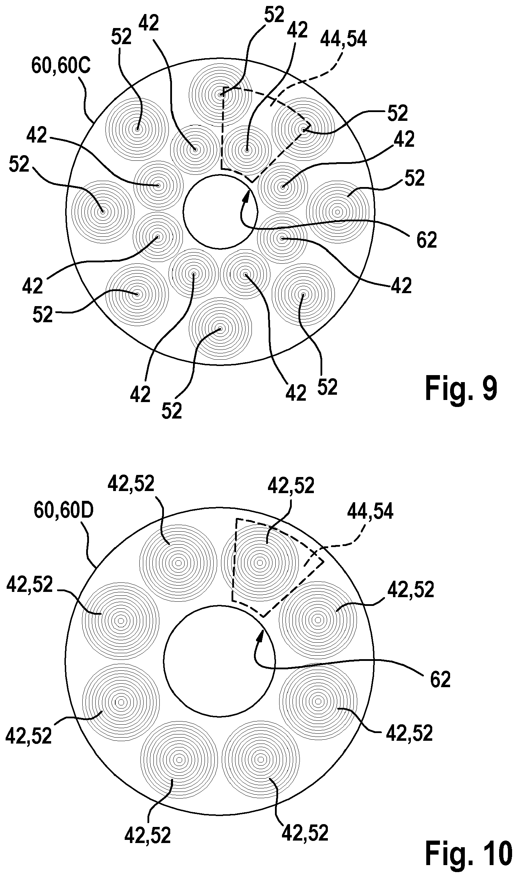

Wie aus Fig. 9 weiter ersichtlich ist, umfasst ein drittes Ausführungsbeispiel des Spulenträgers 60C acht am Rand des als Scheibe ausgeführten Spulenträgers 60B verteilt angeordnete erste Detektionsspulen 42 für den Drehwinkelsensor 40B, und acht verteilt um die zentrale Öffnung 62 des Spulenträgers 60C angeordnete zweite Detektionsspule 52 für den Abstandssensor 50.

Wie aus Fig. 10 weiter ersichtlich ist, umfasst ein viertes Ausführungsbeispiel des Spulenträgers 60D acht verteilt um die zentrale Öffnung 62 des als Scheibe ausgeführten Spulenträgers 60D angeordnete Detektionsspulen 42, 52, welche sowohl als erste Detektionsspulen 42 für den Drehwinkelsensor 40B als auch als zweite Detektionsspulen 52 für den Abstandssensor 50 verwendet werden können.

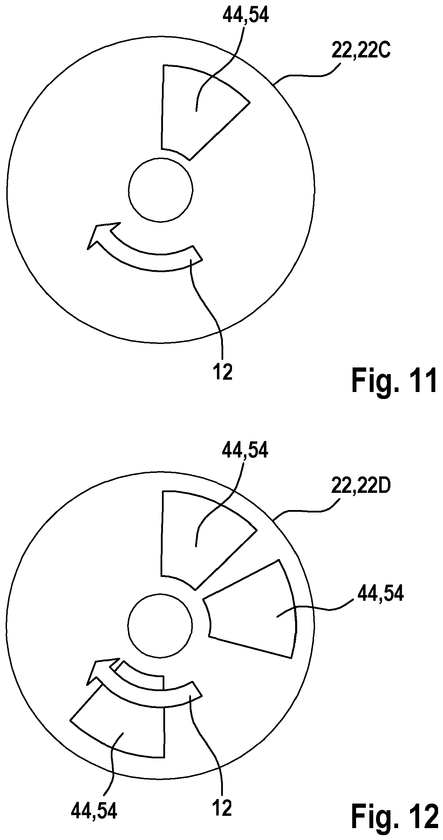

Wie aus Fig. 11 weiter ersichtlich ist, umfasst ein drittes Ausführungsbeispiel des Grundkörpers 22C des Messwertgebers 20 einen als Kreisringsegment ausgeführten Detektionsbereich 44, 54, welcher sowohl den inneren Randbereich 28 als auch den äußeren Randbereich 24 des Grundkörpers 22C zumindest teilweise überdeckt und daher sowohl als erster Detektionsbereich 44 des Drehwinkelsensors 40B als auch als zweiter Detektionsbereich 54 des Abstandssensor 50B verwendet werden kann.

Wie aus Fig. 12 weiter ersichtlich ist, umfasst ein viertes Ausführungsbeispiel des Grundkörpers 22D des Messwertgebers 20 drei als Kreisringsegmente ausgeführte Detektionsbereiche 44, 54, welche sowohl den inneren Randbereich 28 als auch den äußeren Randbereich 24 des Grundkörpers 22C zumindest teilweise überdecken und daher sowohl als erste Detektionsbereichs 44 des Drehwinkelsensors 40B als auch als zweite Detektionsbereich 54 des Abstandssensor 50B verwendet werden. Die Winkelbeziehungen der Detektionsbereichs 44, 54 zueinander entsprechen keinem ganzzahligen Vielfachen. Das dritte oder vierte Ausführungsbeispiel des Grundkörpers 22C, 22D des Messwertgebers können in Kombination mit dem dritten oder vierten Ausführungsbeispiel des Spulenkörpers 60C, 60D eingesetzt werden.

Das Gewinde, über welches die Abstandsinformation für eine Mehrfachumdrehung durch den Abstandssensor detektiert wird, kann sehr grob ausgelegt werden, da die exakte Winkelposition (0°-360°) durch den Drehwinkelsensor aus der Rotation bestimmt wird. Dennoch ist auch über die Abstandsinformation eine weitere Plausibilisierung des ermittelten Drehwinkels möglich. Ferner kann durch die Überdeckung der Spulenanordnung mit mehreren Detektionsbereichen und das separate mögliche Auslesen und Auswerten der Detektionsspulen durch die Auswerte- und Steuereinheit eine Redundanz der Drehwinkelinformation zur Verfügung gestellt werden. Dadurch ergibt sich eine Vielzahl an Varianten. So kann beispielsweise die Information über die Abstandsänderung mit Winkelinformationen kombiniert werden. Zudem kann eine unterschiedliche Anzahl an Spulen eingesetzt werden. Des Weiteren können die Spulen gleichzeitig oder nacheinander ausgelesen (Multiplexing) werden. Die Spulen können beispielsweise jeweils einzeln mit der Auswerte- und Steuereinheit verbunden werden. Alternativ können die Spulen über ihre Anschlüsse ganz oder teilweise zusammengelegt und dann zur Auswerte- und Steuereinheit geführt werden.

Ausführungsformen der vorliegenden Erfindung stellen eine Sensoranordnung zur Erfassung von Drehwinkeln an einem rotierenden Bauteil in einem Fahrzeug zur Verfügung, welche durch die Überführung der Drehbewegung in eine mechanische Wegänderung auch bei mehrfachen Umdrehungen des rotierenden Bauteils immer eine eindeutige Drehposition zur Verfügung stellen. In vorteilhafter Weise bleibt beim Versagen der Elektronik, die Drehbewegung in der mechanischen veränderten Wegposition erhalten. Aufgrund der mechanischen Wegänderung steht auch nach ausgeschalteter Zündung oder abgeklemmter Batterie der richtige absolute Drehwinkel zur Verfügung, wobei gleichzeitig ein besonders sicherer Betrieb bzw. eine besonders sichere Erkennung des Drehwinkels möglich ist.

## Patentansprüche

1. Sensoranordnung zur Erfassung von Drehwinkeln an einem rotierenden Bauteil in einem Fahrzeug, wobei das rotierende Bauteil (10) mit einem Messwertgeber (20) gekoppelt ist, welcher in Verbindung mit mindestens einem Sensor (40, 50) ein den Drehwinkel des rotierenden Bauteils (10) repräsentierendes Signal erzeugt, wobei der Messwertgeber (20) mit mindesten einem als Drehwinkelsensor (50) ausgeführten Sensor einen Drehwinkeldetektor (3) ausbildet, welcher eine Winkelstellung des rotierenden Bauteils (10) im Bereich einer 360°-Rotation erfasst, **dadurch gekennzeichnet, dass** der Messwertgeber (20) mit mindestens einem als Abstandssensor (40) ausgeführten Sensor einen Umdrehungsdetektor (5) ausbildet, welcher eine Umdrehungszahl des rotierenden Bauteils (10) ermittelt, wobei der Messwertgeber (20) mit dem rotierenden Bauteil (10) einen Bewegungswandler ausbildet, welcher die Rotation (12) des rotierenden Bauteils (10) in eine axiale Translation (14) des Messwertgebers (20) in Bezug auf das rotierende Bauteil (10) umwandelt, wobei der mindestens eine Abstandssensor (40) einen zurückgelegten axialen Weg des Messwertgebers (20) ermittelt, welcher die Umdrehungszahl des rotierenden Bauteils (10) repräsentiert, wobei ein aktueller Drehwinkel des rotierenden Bauteils (10) aus der vom Drehwinkeldetektor (3) erfassten Winkelstellung und der vom Umdrehungsdetektor (5) ermittelten Umdrehungszahl ermittelbar ist.

2. Sensoranordnung nach Anspruch 1, **dadurch gekennzeichnet, dass** der Messwertgeber (20) als drehfest mit dem rotierenden Bauteil (10) gekoppelte Scheibe (20A) mit einem Grundkörper (22, 22A, 22B) ausgeführt ist, welcher eine zentrale Öffnung (26) und ein am Außenumfang (22.1) aufgebrachtes Außengewinde (22.2) aufweist, welches in ein Innengewinde (34.2) eingeschraubt ist, welches in einer Innenwand (34.1) einer Aufnahmeöffnung (34) eines Gehäuses (30) eingebracht ist.

3. Sensoranordnung nach Anspruch 2, **dadurch gekennzeichnet, dass** der Grundkörper (22B) über einen Mitnehmer (18) mit dem rotierenden Bauteil (10) gekoppelt ist, welcher die Rotationsbewegung (12) überträgt, wobei der Grundkörper (22B) durch die axiale Führung am Außenumfang (22.1) eine aufgezwungene Axialbewegung ausführt, wobei der zurückgelegte axiale Weg des Grundkörpers (22B) zur Ermittlung der Umdrehungszahl auswertbar ist.

4. Sensoranordnung nach einem der Ansprüche 1 bis 3, **dadurch gekennzeichnet, dass** die Sensoren (40, 50) als Wirbelstromsensoren mit einer vorgegebenen Anzahl von Detektionsspulen (42, 52) und einer vorgegebenen Anzahl von korrespondierenden Detektionsbereichen (44, 54) ausgeführt sind.

5. Sensoranordnung nach Anspruch 4, **dadurch gekennzeichnet, dass** die Detektionsspulen (42) des mindesten einen als Drehwinkelsensor (40) ausgeführten Sensors und die Detektionsspulen (52) des mindestens einen als Abstandssensor (50) ausgeführten Sensors auf einem gemeinsamen Spulenträger (60) angeordnet sind.

6. Sensoranordnung nach Anspruch 4 oder 5, **dadurch gekennzeichnet, dass** die Detektionsbereiche (44) des mindesten einen als Drehwinkelsensor (40) ausgeführten Sensors an einem inneren Randbereich (28) des Grundkörpers (22, 22A, 22B) des Messwertgebers (20) angeordnet sind.

7. Sensoranordnung nach einem der Ansprüche 4 bis 6, **dadurch gekennzeichnet, dass** die Detektionsbereiche (54) des mindesten einen als Abstandssensor (50) ausgeführten Sensors an einem äußeren Randbereich (24) des Grundkörpers (22, 22A, 22B) des Messwertgebers (20) angeordnet sind.

8. Sensoranordnung nach Anspruch 7, **dadurch gekennzeichnet, dass** zwischen dem inneren Randbereich (28) und dem äußeren Randbereich (24) des Grundkörpers (22A) ein verformbarer Zwischenbereich (25) angeordnet ist, so dass der innere Randbereich (28) seine axiale Position während der Drehbewegung des rotierenden Bauteils (10) beibehält und der äußere Bereich (24) eine durch die axiale Führung am Außenumfang (22.1) aufgezwungene Axialbewegung ausführt, wobei der zurückgelegte axiale Weg des äußeren Randbereichs (24) zur Ermittlung der Umdrehungszahl auswertbar ist.

9. Sensoranordnung nach einem der Ansprüche 4 bis 8, **dadurch gekennzeichnet, dass** der mindesten eine als Abstandssensor (50) ausgeführte Sensor und der mindestens eine als Drehwinkelsensor (40) ausgeführte Sensor mindestens eine gemeinsame Detektionsspule (42, 52) und/oder mindestens einen gemeinsamen Detektionsbereich (44, 54) aufweisen.

10. Sensoranordnung nach einem der Ansprüche 4 bis 9, **dadurch gekennzeichnet, dass** die Detektionsspulen (42, 52) der Sensoren (40, 50) in mehreren Lagen verteilt im Spulenträger (60) angeordnet sind.

11. Sensoranordnung nach einem der Ansprüche 4 bis 10, **dadurch gekennzeichnet, dass** eine Auswerte- und Steuereinheit (70) die Spulen (42, 52) des mindestens einen Drehwinkelsensors (40) und/oder des mindestens einen Abstandssensors (50) gleichzeitig oder in einer vorgegebenen Reihenfolge auswertet.

## Claims

1. Sensor arrangement for sensing rotational angles on a rotating component in a vehicle, wherein the rotating component (10) is coupled to a measured value encoder (20) which generates, in conjunction with at least one sensor (40, 50), a signal which represents the rotational angle of the rotating component (10), wherein the measured value encoder (20) forms, with at least one sensor which is embodied as a rotational angle sensor (50), a rotational angle detector (3) which senses an angular position of the rotating component (10) in the region of a 360° rotation, **characterized in that** the measured value encoder (20) forms, with at least one sensor which is embodied as a distance sensor (40), a rotation detector (5) which determines a speed of rotation of the rotating component (10), wherein the measured value encoder (20) forms, with the rotating component (10) a movement transducer which converts the rotation (12) of the rotating component (10) into an axial translation (14) of the measured value encoder (20) with respect to the rotating component (10), wherein the at least one distance sensor (40) determines an axial distance travelled by the measured value encoder (20) which represents the speed of rotation of the rotating component (10), wherein a current rotational angle of the rotating component (10) can be determined from the angular position sensed by the rotational angle detector (3) and the speed of rotation determined by the rotation detector (5) can be determined.

2. Sensor arrangement according to Claim 1, **characterised in that** the measured value encoder (20) is embodied as a disc (20A) which is coupled in a rotationally fixed manner to the rotating component (10) and is embodied with a base body (22, 22A, 22B) which has a central opening (26) and an outer thread (22.2) which is applied to the outer circumference (22.1) and is screwed into an internal thread (34.2) which is formed in an inner wall (34.1) of a receptacle opening (34) of a housing (30).

3. Sensor arrangement according to Claim 2, **characterized in that** the base body (22B) is coupled to the rotating component (10) via a driver (18) which transmits the rotational movement (12), wherein the base body (22B) executes a forced axial movement by virtue of the axial guidance on the outer circumference (22.1), wherein the axial distance travelled by the base body (22B) can be evaluated in order to determine the speed of rotation.

4. Sensor arrangement according to one of Claims 1 to 3, **characterized in that** the sensors (40, 50) are embodied as eddy current sensors with a predetermined number of detection coils (42, 52) and a predetermined number of corresponding detection regions (44, 54).

5. Sensor arrangement according to Claim 4, **characterized in that** the detection coils (42) of the at least one sensor which is embodied as a rotational angle sensor (40) and the detection coils (52) of the at least one sensor which is embodied as a distance sensor (50) are arranged on a common coil carrier (60).

6. Sensor arrangement according to Claim 4 or 5, **characterized in that** the detection regions (44) of the at least one sensor which is embodied as a rotational angle sensor (40) are arranged on an inner edge region (28) of the base body (22, 22A, 22B) of the measured value encoder (20).

7. Sensor arrangement according to one of Claims 4 to 6, **characterized in that** the detection regions (54) of the at least one sensor which is embodied as a distance sensor (50) are arranged on an outer edge region (24) of the base body (22, 22A, 22B) of the measured value encoder (20).

8. Sensor arrangement according to Claim 7, **characterized in that** a deformable intermediate region (25) is arranged between the inner edge region (28) and the outer edge region (24) of the base body (22A) in such a way that the inner edge region (28) maintains its axial position during the rotational movement of the rotating component (10), and the outer region (24) executes an axial movement which is forced by the axial guidance on the outer circumference (22.1), wherein the axial distance which is travelled by the outer edge region (24) can be evaluated in order to determine the speed of rotation.

9. Sensor arrangement according to one of Claims 4 to 8, **characterized in that** the at least one sensor which is embodied as a distance sensor (50) and the at least one sensor which is embodied as a rotational angle sensor (40) have at least one common detection coil (42, 52) and/or at least one common detection region (44, 54).

10. Sensor arrangement according to one of Claims 4 to 9, **characterized in that** the detection coils (42, 52) of the sensors (40, 50) are arranged distributed in a plurality of layers in the coil carrier (60).

11. Sensor arrangement according to one of Claims 4 to 10, **characterized in that** an evaluation and control unit (70) evaluates the coils (42, 52) of the at least one rotational angle sensor (40) and/or the at least one distance sensor (50) simultaneously or in a predetermined sequence.

## Revendications

1. Système de capteur servant à détecter des angles de rotation au niveau d'un composant rotatif dans un véhicule, dans lequel le composant rotatif (10) est couplé à un transmetteur de mesure (20) qui, en liaison avec au moins un capteur (40, 50), génère un signal qui représente l'angle de rotation du composant rotatif (10), dans lequel le transmetteur de mesure (20) forme avec au moins un capteur configuré en tant que capteur d'angle de rotation (50) un détecteur d'angle de rotation (3) qui détecte une position angulaire du composant rotatif (10) dans une plage de rotation de 360°,
**caractérisé en ce que** le transmetteur de mesure (20) forme avec au moins un capteur configuré en tant que capteur de distance (40) un détecteur de révolutions (5) qui détermine un nombre de tours du composant rotatif (10), dans lequel, avec le composant rotatif (10), le transmetteur de mesure (20) forme un convertisseur de mouvement qui convertit la rotation (12) du composant rotatif (10) en une translation axiale (14) du transmetteur de mesure (20) par rapport au composant rotatif (10), dans lequel l'au moins un capteur de distance (40) détermine une course axiale du transmetteur de mesure (20) qui représente un nombre de tours du composant rotatif (10), dans lequel un angle de rotation actuel du composant rotatif (10) peut être déterminé à partir de la position angulaire détectée par le détecteur d'angle de rotation (3) et du nombre de tours déterminé par le détecteur de révolutions (5).

2. Système de capteur selon la revendication 1, **caractérisé en ce que** le transmetteur de mesure (20) est configuré sous la forme d'un disque (20A), couplé de manière solidaire en rotation au composant rotatif (10), muni d'un corps de base (22, 22A, 22B) qui comporte une ouverture centrale (26) et un filetage extérieur (22.2) réalisé sur une circonférence extérieure (22.1), lequel filetage extérieur est vissé dans un filetage intérieur (34.2) réalisé dans une paroi intérieure (34.1) d'une ouverture de réception (34) d'un boîtier (30).

3. Système de capteur selon la revendication 2, **caractérisé en ce que** le corps de base (22B) est couplé au composant (10) par l'intermédiaire d'un dispositif d'entraînement (18) qui transmet le mouvement de rotation (12), dans lequel le corps de base (22B) effectue un mouvement axial imposé par le guidage axial sur la circonférence extérieure (22.1), dans lequel la course axiale parcourue par le corps de base (22B) peut être analysée pour déterminer le nombre de tours.

4. Système de capteur selon l'une quelconque des revendications 1 à 3, **caractérisé en ce que** les capteurs (40, 50) sont configurés sous la forme de capteurs de courant de Foucault ayant un nombre prédéterminé de bobines de détection (42, 52) et un nombre prédéterminé de zones de détection (44, 54) correspondantes.

5. Système de capteur selon la revendication 4, **caractérisé en ce que** les bobines de détection (42) de l'au moins un capteur configuré sous la forme d'un capteur d'angle de rotation (40) et les bobines de détection (52) de l'au moins capteur configuré sous la forme d'un capteur de distance (50) sont disposées sur un support de bobines (60) commun.

6. Système de capteur selon la revendication 4 ou 5, **caractérisé en ce que** les zones de détection (44) de l'au moins un capteur configuré sous la forme d'un capteur d'angle de rotation (40) sont disposées dans une zone périphérique intérieure (28) du corps de base (22, 22A, 22B) du transmetteur de mesure (20).

7. Système de capteur selon l'une quelconque des revendications 4 à 6, **caractérisé en ce que** les zones de détection (54) de l'au moins un capteur configuré sous la forme d'un capteur de distance (50) sont disposées au niveau d'une zone périphérique extérieure (24) du corps de base (22, 22A, 22B) du transmetteur de mesure (20).

8. Système de capteur selon la revendication 7, **caractérisé en ce qu'**une zone intermédiaire déformable (25) est disposée entre la zone périphérique intérieure (28) et la zone périphérique extérieure (24) du corps de base (22A) de manière à ce que la zone périphérique intérieure (28) maintienne sa position axiale pendant le mouvement de rotation du composant rotatif (10) et à ce que la zone extérieure (24) effectue un mouvement axial imposé par le guidage axial sur la circonférence extérieure (22.1), dans lequel la course axiale parcourue par la zone périphérique extérieure (24) peut être analysée pour déterminer le nombre de tours.

9. Système de capteur selon l'une quelconque des revendications 4 à 8, **caractérisé en ce que** l'au moins un capteur configuré sous la forme d'un capteur de distance (50) et l'au moins un capteur configuré sous la forme d'un capteur d'angle de rotation (40) comportent au moins une bobine de détection commune (42, 52) et/ou au moins une zone de détection commune (44, 54).

10. Système de capteur selon l'une quelconque des revendications 4 à 9, **caractérisé en ce que** les bobines de détection (42, 52) des capteurs (40, 50) sont disposées à plusieurs positions réparties dans le support de bobines (60).

11. Système de capteur selon l'une quelconque des revendications 4 à 10, **caractérisé en ce qu'**une unité d'analyse et de commande (70) analyse les bobines (42, 52) de l'au moins un capteur d'angle de rotation (40) et/ou de l'au moins un capteur de distance (50) simultanément ou selon une séquence prédéterminée.
